(19) Europäisches Patentamt / European Patent Office / Office européen des brevets

(11) **EP 3 574 292 B1**

(12) **EUROPÄISCHE PATENTSCHRIFT**

(45) Veröffentlichungstag und Bekanntmachung des Hinweises auf die Patenterteilung:
**01.03.2023 Patentblatt 2023/09**

(21) Anmeldenummer: **18701249.7**

(22) Anmeldetag: **03.01.2018**

(51) Internationale Patentklassifikation (IPC):
**G01J 3/02** *(2006.01)*    **G01J 3/46** *(2006.01)*
**B29D 11/00** *(2006.01)*    **G02C 7/10** *(2006.01)*

(52) Gemeinsame Patentklassifikation (CPC):
**G01J 3/463; B29D 11/00923; G01J 3/0297;**
G02C 7/10

(86) Internationale Anmeldenummer:
**PCT/EP2018/050143**

(87) Internationale Veröffentlichungsnummer:
**WO 2018/137901 (02.08.2018 Gazette 2018/31)**

(54) **ORTSAUFGELÖSTES GEGENFÄRBEN**

SPATIALLY RESOLVED COUNTER-COLORING

COLORATION COMPLÉMENTAIRE À RÉSOLUTION SPATIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2017 DE 102017000698**

(43) Veröffentlichungstag der Anmeldung:
**04.12.2019 Patentblatt 2019/49**

(73) Patentinhaber: **Rodenstock GmbH**
**80687 München (DE)**

(72) Erfinder: **DAHMEN, Klaus**
**61476 Kronberg (DE)**

(74) Vertreter: **Müller-Boré & Partner**
**Patentanwälte PartG mbB**
**Friedenheimer Brücke 21**
**80639 München (DE)**

(56) Entgegenhaltungen:
| | |
|---|---|
| EP-A1- 0 466 451 | EP-A2- 1 298 483 |
| CN-A- 103 076 093 | DE-A1-102013 003 558 |
| JP-A- H09 263 694 | JP-A- 2013 213 964 |
| US-A- 3 423 223 | |

EP 3 574 292 B1

**Beschreibung**

Die vorliegende Erfindung betrifft das Färben von optischen Gläsern, insbesondere Brillengläsern mit einer verbesserten Annäherung an eine zu erreichende Zielfärbung. Brillengläser werden oft mit oder aus Kunststoffmaterialien hergestellt. Diese Kunststoffmaterialien können eine Eigenfärbung aufweisen, wobei je nach Material und Dicke unterschiedliche Farbtöne möglich sind (z.B. Grauton, Gelb- oder Blaustich). Gerade die Dicke eines Brillenglases kann den resultierenden Farbeindruck bzw. dessen Intensität deutlich beeinflussen. Dabei variiert die Dicke über ein Brillenglas hinweg, was aufgrund der Eigenfärbung des Brillenglasmaterials zu einem positions- bzw. blickrichtungsabhängigen Farbeindruck für den Brillenträger führen kann. Insbesondere bei gefärbten bzw. getönten Gläsern kann diese Eigenfärbung als sehr störend wahrgenommen werden. Ist die Zielfärbung etwa ein helles Blau und die Eigenfärbung des Glasmaterials Gelb, so kann über das Glas hinweg eine Bandbreite von grünen bis blauen Teilfärbungen entstehen. Das Dokument EP0466451 offenbart ein Verfahren zum Färben eines Glases bei dem die Eigenfärbung des zu färbendem Glases gemessen und berücksichtigt wird.

Gelegentlich wird versucht, den Einfluss der Eigenfärbung eines Kunststoffmaterials durch Beimischung anderer Farbkomponenten in das Volumenmaterial des Kunststoffs zu kompensieren bzw. in einen für das Auge spektral unempfindlicheren Bereich zu verschieben. Beispielsweise bei Materialien, die etwa einen starken Gelbindex besitzen, also für das Auge als gelbstichig erscheinen, werden gelegentlich sogenannte "Blueing-Agents" verwendet. Allgemein gesprochen ist durch die Verwendung von Komplementärfarben im Volumenmaterial eine Verschiebung in den neutralen Graubereich hin möglich. Eine Beseitigung des gesamten Effekts wird damit jedoch nicht erreicht. So wird etwa durch den Zusatz eines "Blueing-Agents" die materialdickenabhängige Gelbverschiebung zu Gunsten einer Vergrauung verschoben. Somit bleibt das dickenabhängige Verfärben prinzipiell erhalten.

Aufgabe der Erfindung ist es, die Kontrolle der resultierenden Gesamtfärbung eines Brillenglases selbst bei Verwendung verschiedenster Kunststoffe für das Brillenglas und unterschiedlichster Geometrien bzw. optischer Wirkungen des Brillenglases zu verbessern. Diese Aufgabe wird durch ein Verfahren mit den in Anspruch 1, ein System mit den in Anspruch 12 und ein Computerprogrammprodukt mit den in Anspruch 14 angegebenen Merkmalen gelöst. Bevorzugte Ausführungsformen sind Gegenstand der abhängigen Ansprüche.

Somit betrifft die Erfindung in einem Aspekt ein Verfahren zum Färben eines optischen Glases, insbesondere eines Brillenglases, welches ein vorbestimmtes Glasmaterial umfasst. Insbesondere kann das optische Glas aus dem vorbestimmten Glasmaterial gefertigt sein. Dabei soll eine Zielfärbung des optischen Glases erreicht werden. Die Zielfärbung kann dabei eine homogene, also über das gesamte Glas gleichmäßig Färbung sein. In einer anderen Ausführungsform kann die Färbung aber auch einen Farbübergang oder Farbverlauf festlegen. Beispielsweise im Falle eines Brillenglases kann im oben eine dunklere Färbung gewünscht sein als unten.

Das Verfahren umfasst dabei ein Bestimmen einer materialspezifischen Eigenfärbung des vorbestimmten Glasmaterials. Die Eigenfärbung des vorbestimmten Glasmaterials kann sich aus Effekten an der Oberfläche des Glasmaterials und aus Effekten im Inneren, also im Volumen, des Glasmaterials zusammensetzen. Beispielsweise könnte sich eine materialspezifische Eigenfärbung des vorbestimmten Glasmaterials durch einen Eigenfarbvektor $\vec{F}(d) := \vec{F_0} + d \cdot \vec{D}$ mit einem Oberflächenfarbvektor $\vec{F_0}$ und einem Volumenfarbvektor $\vec{D}$ bei einer Glasdicke $d$ beschreiben lassen.

Außerdem umfasst das Verfahren ein Bestimmen einer Glasdicke an einer Vielzahl von Auswertungsstellen auf dem optischen Glas. Es wird somit eine ortsabhängige Glasdicke des optischen Glases bestimmt. Dies kann auf unterschiedliche Weise erfolgen. In einer bevorzugten Ausführungsform kann die Glasdicke beispielsweise unmittelbar vor dem Färben gemessen werden. Besonders bevorzugt ist es aber, wenn das Bestimmen der ortsabhängigen Glasdicke an einer Vielzahl von Auswertungsstellen auf dem optischen Glas anhand von Datensätzen eines optischen Berechnungs- und Optimierungsverfahrens zumindest einer Glasoberfläche des optischen Glases erfolgt. So sind für optische Gläser, insbesondere Brillengläser oft Datensätze über die Verteilung der optischen Eigenschaften über das Brillenglas hinweg beziehungsweise über den Verlauf und die Form der Oberflächen und Daten über die ortsabhängige Glasdicke aus der Glasherstellung verfügbar, insbesondere wenn das Brillenglas (individuell) berechnet und optimiert wurde.

Das Verfahren umfasst außerdem ein Ermitteln einer (ortsabhängigen) Eigenfärbung des optischen Glases aus der materialspezifischen Eigenfärbung des vorbestimmten Glasmaterials und der (ortsabhängigen) Glasdicke an der Vielzahl von Auswertungsstellen auf dem optischen Glas. Während eventuelle Oberflächeneffekte einer Eigenfärbung vorzugsweise im Wesentlichen über das gesamte optische Glas hinweg konstant sind, hängen Volumeneffekt insbesondere von der Dicke des vorbestimmten Glasmaterials ab. Diese dickenabhängige Eigenfärbung führt bei einer ortsabhängigen Dicke somit zu einer möglicherweise inhomogenen, also ortsabhängigen Eigenfärbung des optischen Glases.

Des weiteren umfasst das Verfahren ein Bestimmen einer Referenzfarbpigmentmenge für zumindest ein Farbpigment (besonders bevorzugt für zumindest drei verschiedene Farbpigmente) derart, dass die Referenzfarbpigmentmenge auf einem Referenzsubstrat aufgebracht für das Referenzsubstrat die am optischen Glas zu erreichende Zielfärbung bewirkt. Insbesondere wird für jedes beim Färben verwendete Farbpigment eine entsprechende Referenzfarbpigmentmenge bestimmt. Mit diesen Referenzfarbpigmentmengen erhält das Referenzsubstrat die eigentlich am dem optischen Glas zu erreichende Zielfärbung. Die Referenzfarbpigmentmengen können für jede zu erreichende Zielfärbung einmal vorab experimentell ermittelt und dann in einer Datenbank hinterlegt werden. Auf Basis einer solchen Datenbank können dann neue Zielfärbungen auch beispielsweise durch Interpolation aus bestehenden Daten berechnet werden.

In einer bevorzugten Ausführungsform könnte als Referenzsubstrat ein möglichst transparentes und/oder farbneutrales Substrat verwendet werden. Insbesondere in diesem Fall kann als ermittelte Eigenfärbung des optischen Glases die gesamte Färbung des optischen Glases (vor dem Färbeprozess) verwendet beziehungsweise bestimmt werden. Alternativ, insbesondere wenn als Referenzsubstrat ein nicht vollständig transparentes und/oder farbneutrales Substrat verwendet wird, kann als Eigenfärbung des optischen Glases eine Abweichung der Färbung des optischen Glases (vor dem Färbeprozess) von der Eigenfärbung des Referenzsubstrates verwendet werden. Insbesondere da sich viele Farbpigmente auf unterschiedlichen Materialen auch unterschiedlich verhalten können, z.B. unterschiedliche Färbungen bewirken, ist es in der Praxis besonders bevorzugt, wenn das Material des Referenzsubstrats dem vorbestimmten Glasmaterial entspricht. Damit stimmen das zu färbende optische Glas und das Referenzsubstrat zumindest hinsichtlich von Oberflächeneffekten der Eigenfärbung im Wesentlichen überein. Die verbleibenden Anteile eines Unterschieds in der Eigenfärbung sind im Wesentlichen auf Volumeneffekte und damit auf die (ortsabhängige) Glasdicke des zu färbenden Glases zurückzuführen.

Unter Berücksichtigung des Referenzsubstrats umfasst das Bestimmen der ortsabhängigen Glasdicke an einer Vielzahl von Auswertungsstellen auf dem optischen Glas besonders bevorzugt ein Ermitteln einer Abweichung $\Delta d$ der ortsabhängigen Glasdicke des optischen Glases an einer Vielzahl von Auswertungsstellen auf dem optischen Glas von einer Dicke des Referenzsubstrats. Dabei umfasst das Ermitteln der ortsabhängigen Eigenfärbung des optischen Glases besonders bevorzugt ein Ermitteln einer Abweichung $\Delta\vec{F}$ einer Eigenfärbung des optischen Glases von einer Eigenfärbung des Referenzsubstrats anhand der ermittelten Abweichung $\Delta d$ der ortsabhängigen Glasdicke des optischen Glases von einer Dicke des Referenzsubstrats gemäß

$$\Delta\vec{F} = \Delta d \cdot \vec{D}$$

mit einem Volumenfarbvektor $\vec{D}$. Wird außerdem eine Dicke des Referenzsubstrats gewählt, die einem Mittelwert einer Dicke von zu färbenden optischen Gläsern entspricht oder nahekommt, sind (lokale) Abweichungen der Eigenfärbung des zu färbenden optischen Glases von der Eigenfärbung des Referenzsubstrats gering. Damit ist eine entsprechend kleine Korrektur der zu applizierenden Farbpigmentmenge (auch als Zielfarbpigmentmenge) von der (jeweiligen) Referenzfarbpigmentmenge nötig. Bei sehr kleinen Korrekturen sind selbst nachfolgend beschriebene, bevorzugte lineare Farbkorrekturmodell noch sehr genau.

Das Verfahren umfasst außerdem ein Festlegen eines Farbkorrekturmodells, welches einen Zusammenhang zwischen einer Abweichung einer Farbpigmentmenge für zumindest ein Farbpigment von der Referenzfarbpigmentmenge des zumindest einen Farbpigments und einer daraus resultierenden Abweichung einer Färbung des Referenzsubstrats von der Zielfärbung beschreibt. Diese Beschreibung erfolgt dabei vorzugsweise einem für die jeweilige Anwendung als besonders geeignet angesehenen Farbraum. Nachfolgend wird beispielhaft der L*a*b*-Farbraum (CIELAB) gemäß EN ISO 11664-4, gewählt. Die Erfindung ist aber auch mit anderen Farbraummodellen nutzbar, z.B. RGB-Farbraum, CMYK-Farbraum, usw..

Besonders bevorzugt wird ein lineares Farbkorrekturmodell festgelegt. Insbesondere umfasst das Festlegen des Farbkorrekturmodells dabei ein Bestimmen einer Pigmentmengenkorrekturmatrix $\overleftrightarrow{M}$ derart, dass der Zusammenhang zwischen einer Abweichung $\Delta\vec{P} = \vec{P} - \vec{P_r}$ einer Farbpigmentmenge $\vec{P}$ für zumindest ein Farbpigment von der Referenzfarbpigmentmenge $\vec{P_r}$ des zumindest einen Farbpigments und einer daraus resultierenden Abweichung $\Delta\vec{Z} = \vec{Z} - \vec{Z_z}$ einer Färbung $\vec{Z}$ des Referenzsubstrats von der Zielfärbung $\vec{Z_z}$ durch

$$\Delta\vec{P} = \overleftrightarrow{M} \cdot \Delta\vec{Z}$$

beschrieben wird. Dabei stellt $\vec{P}$ einen Farbpigmentmengenvektor dar, dessen Einträge (Komponenten) die jeweilige Menge unterschiedlicher Farbpigmente repräsentiert. Bei Verwendung von 3 unterschiedlichen Farbpigmenten bildet $\vec{P}$ somit vorzugsweise einen 3-dimensionalen Vektor. $\vec{Z}$ stellt einen Färbungsvektor dar, dessen Einträge (Komponenten) den Koordinaten des gewählten Farbraums entsprechen. Besonders bevorzugt wird die Pigmentmengenkorrekturmatrix $\overleftrightarrow{M}$ am Referenzsubstrat experimentell ermittelt. Dazu kann gezielt die Pigmentmenge der unterschiedlichen Farbpigmente variiert und die resultierende Färbung gemessen. Insbesondere bei Verwendung eines linearen Farbkorrekturmodells ist die experimentelle Ermittlung von Matrixeinträgen mit wenigen Messpunkten leicht unterschiedlicher Färbung und Farbpigmentmengen auf dem Referenzsubstrat bereits recht genau möglich.

Schließlich umfasst das Verfahren ein Bestimmen einer Zielfarbpigmentmenge, welche von der Referenzfarbpigmentmenge um eine Farbpigmentmengenkorrektur abweicht, welche gemäß dem festgelegten Farbkorrekturmodell die ermittelte Eigenfärbung des optischen Glases kompensiert. Beispielsweise kann das Bestimmen einer Zielfarbpigmentmenge $\overrightarrow{P_z}$ gemäß

$$\overrightarrow{P_z} = \overrightarrow{P_r} - \overleftrightarrow{M} \cdot \Delta\vec{F}$$

erfolgen.

Soweit sich die Eigenfärbung des optischen Glases aufgrund der ortsabhängigen Glasdicke über das optische Glas hinweg verändert, wird mit dem erfindungsgemäßen Verfahren eine sehr effiziente Kompensation dieses unerwünschten Effekts durch eine ortsabhängige Farbpigmentmengenkorrektur erreicht. Diese korrigierte Farbpigmentmenge (Zielfarbpigmentmenge) kann dann auf zumindest eine Oberfläche des optischen Glases aufgebracht werden. Damit erhält das zu färbende Glas auch bei ganz unterschiedlichen Glasdicken immer mit einer sehr guten Näherung über die gesamte Glasfläche hinweg die gewünschte Zielfärbung. Dabei ist die Erfindung gleichermaßen einfach und wirkungsvoll auf homogene Färbungen und Farbübergänge (z.B. Bicolor-Färbungen) anwendbar. Selbst bei sehr starken optischen Wirkungen (starke Plus- oder Minus-Wirkungen oder starke Prismen) können unerwünschte Abweichungen vom der zu erreichenden Färbung sehr effizient unterdrückt werden.

In einer bevorzugten Ausführungsform lässt sich die für das optische Glas zu erreichende Zielfärbung $\overrightarrow{Z_z}$ gemäß

$$\overrightarrow{Z_z}(\vec{x}) = I(\vec{x}) \cdot \overrightarrow{Z_{O,z}} + \left(1 - I(\vec{x})\right) \cdot \overrightarrow{Z_{U,z}}$$

beschreiben, so dass sie mit einer an einer ersten Auswertungsstelle $\overrightarrow{x_O}$ auf dem optischen Glas zu erreichenden ersten Zielfärbung $\overrightarrow{Z_{O,z}}$, einer an einer zweiten Auswertungsstelle $\overrightarrow{x_U}$ auf dem optischen Glas zu erreichenden zweiten Zielfärbung $\overrightarrow{Z_{U,z}}$ und einer vorzugsweise stetigen Interpolationsfunktion $I(\vec{x})$, welche $I(\overrightarrow{x_O}) = 1$ und $I(\overrightarrow{x_U}) = 0$ erfüllt, von einer Position $\vec{x}$ auf dem optischen Glas abhängt.

Vorzugsweise umfasst das Bestimmen der Referenzfarbpigmentmenge dabei:

- Bestimmen einer ersten Referenzfarbpigmentmenge $\overrightarrow{P_{O,r}}$ derart, dass die erste Referenzfarbpigmentmenge $\overrightarrow{P_{O,r}}$ auf dem Referenzsubstrat aufgebracht für das Referenzsubstrat die am optischen Glas zu erreichende erste Zielfärbung $\overrightarrow{Z_{O,z}}$ bewirkt; und
- Bestimmen einer zweiten Referenzfarbpigmentmenge $\overrightarrow{P_{U,r}}$ derart, dass die zweite Referenzfarbpigmentmenge $\overrightarrow{P_{U,r}}$ auf dem Referenzsubstrat aufgebracht für das Referenzsubstrat die am optischen Glas zu erreichende zweite Zielfärbung $\overrightarrow{Z_{U,z}}$ bewirkt.

Besonders bevorzug umfasst das Festlegen eines Farbkorrekturmodells dabei:

- Bestimmen einer ersten Pigmentmengenkorrekturmatrix $\overleftrightarrow{M_O}$ derart, dass der Zusammenhang zwischen einer ersten Abweichung $\Delta\overrightarrow{P_O} = \overrightarrow{P_O} - \overrightarrow{P_{O,z}}$ einer ersten Farbpigmentmenge $\overrightarrow{P_O}$ für zumindest ein Farbpigment von der ersten Referenzfarbpigmentmenge $\overrightarrow{P_{O,r}}$ des zumindest einen Farbpigments und einer daraus resultierenden ersten Abweichung $\Delta\overrightarrow{Z_O} = \overrightarrow{Z_O} - \overrightarrow{Z_{O,z}}$ einer ersten Färbung $\overrightarrow{Z_O}$ des Referenzsubstrats von der ersten Zielfärbung $\overrightarrow{Z_{O,z}}$ durch

$$\Delta\overrightarrow{P_O} = \overleftrightarrow{M_O} \cdot \Delta\overrightarrow{Z_O}$$

beschrieben wird; und

- Bestimmen einer zweiten Pigmentmengenkorrekturmatrix $\overleftrightarrow{M_U}$ derart, dass der Zusammenhang zwischen einer Abweichung $\Delta\overrightarrow{P_U} = \overrightarrow{P_U} - \overrightarrow{P_{U,z}}$ einer zweiten Farbpigmentmenge $\overrightarrow{P_U}$ für zumindest ein Farbpigment von der zweiten Referenzfarbpigmentmenge $\overrightarrow{P_{U,r}}$ des zumindest einen Farbpigments und einer daraus resultierenden zweiten Abweichung $\Delta\overrightarrow{Z_U} = \overrightarrow{Z_U} - \overrightarrow{Z_{U,z}}$ einer zweiten Färbung $\overrightarrow{Z_U}$ des Referenzsubstrats von der zweiten Zielfärbung $\overrightarrow{Z_{U,z}}$ durch

$$\Delta\overrightarrow{P_U} = \overleftrightarrow{M_U} \cdot \Delta\overrightarrow{Z_U}$$

beschrieben wird.

Weiter bevorzugt umfasst das Bestimmen einer Zielfarbpigmentmenge dabei:

- Bestimmen einer ersten Zielfarbpigmentteilmenge $\overrightarrow{P_{O,k}}$ gemäß

$$\overrightarrow{P_{O,z}} = \overrightarrow{P_O} - \overleftrightarrow{M_O} \cdot \Delta\vec{F};$$

- Bestimmen einer zweiten Zielfarbpigmentteilmenge $\overrightarrow{P_{U,k}}$ gemäß

$$\overrightarrow{P_{U,z}} = \overrightarrow{P_U} - \overleftrightarrow{M_U} \cdot \Delta\vec{F};$$

und
- Bestimmen der Zielfarbpigmentmenge $\overrightarrow{P_z}$ gemäß

$$\overrightarrow{P_z} = I(\vec{x}) \cdot \overrightarrow{P_{O,z}} + \left(1 - I(\vec{x})\right) \cdot \overrightarrow{P_{U,z}}$$

In einem weiteren Aspekt betrifft die Erfindung ein entsprechendes Färbesystem zum Färben eines optischen Glases, insbesondere eines Brillenglases, welches ein vorbestimmtes Glasmaterial umfasst, zum Erreichen einer Zielfärbung des optischen Glases, wobei das System umfasst:

- ein Glasmaterialdatenmodul zum Bestimmen einer materialspezifischen Eigenfärbung des vorbestimmten Glasmaterials;
- ein Glasdickenmodul zum Bestimmen einer (ortsabhängigen) Glasdicke an einer Vielzahl von Auswertungsstellen auf dem optischen Glas;
- ein Eigenfärbungsermittlungsmodul zum Ermitteln einer (ortsabhängigen) Eigenfärbung des optischen Glases aus der materialspezifischen Eigenfärbung des vorbestimmten Glasmaterials und der (ortsabhängigen) Glasdicke an der Vielzahl von Auswertungsstellen auf dem optischen Glas;
- ein Referenzmodul zum Bestimmen einer Referenzfarbpigmentmenge für zumindest ein Farbpigment (besonders bevorzugt für zumindest drei unterschiedliche Farbpigmente) derart, dass die Referenzfarbpigmentmenge auf einem Referenzsubstrat aufgebracht für das Referenzsubstrat die am optischen Glas zu erreichende Zielfärbung bewirkt;
- ein Farbkorrekturmodellmodul zum Festlegen eines Farbkorrekturmodells, welches einen Zusammenhang zwischen einer Abweichung einer Farbpigmentmenge für zumindest ein Farbpigment von der Referenzfarbpigmentmenge des zumindest einen Farbpigments und einer daraus resultierenden Abweichung einer Färbung des Referenzsubstrats von der Zielfärbung beschreibt; und
- ein Zielfarbpigmentmengenmodul zum Bestimmen einer Zielfarbpigmentmenge, welche von der Referenzfarbpigmentmenge um eine Farbpigmentmengenkorrektur abweicht, welche gemäß dem festgelegten Farbkorrekturmodell die ermittelte Eigenfärbung des optischen Glases kompensiert.

Vorzugsweise umfasst das Färbesystem außerdem ein Farbpigmentapplikationsmodul zum Aufbringen der Zielfarbpigmentmenge auf zumindest eine Oberfläche des optischen Glases. Besonders bevorzugt ist das Färbesystem ausgelegt ein hier beschriebenes Verfahren zum Färben eines optischen Glases, insbesondere gemäß einer der hier beschriebenen bevorzugten Ausführungsformen auszuführen.

In einem weiteren Aspekt bietet die Erfindung ein Computerprogrammprodukt, insbesondere in Form eines nicht-flüchtigen Datenspeichers und/oder einer Signalfolge, welches Programmcode umfasst, der geladen und ausgeführt in einem Färbesystem wie oben definiert dieses veranlasst, ein Verfahren gemäß der vorliegenden Erfindung insbesondere in einer der hier beschriebenen bevorzugten Ausführungsformen auszuführen.

Weitere bevorzugte Details bei der Implementierung der Erfindung werden nachfolgend mit Bezug auf die beigefügten Figuren anhand bevorzugter Ausführungsformen beschrieben. Dabei zeigen:

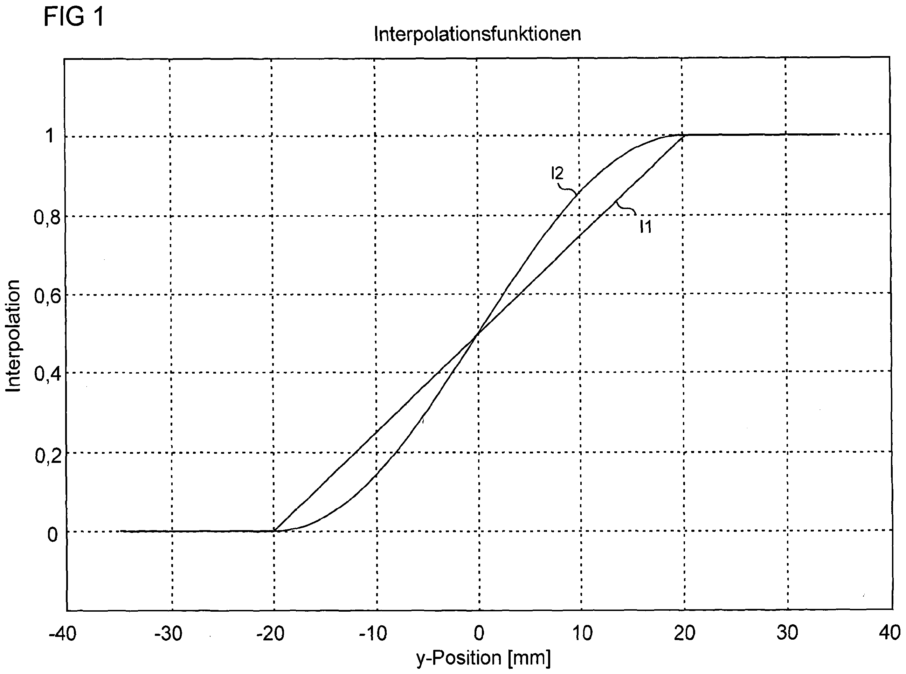

Fig. 1: eine schematische Darstellung des Verlaufs beispielhafter Interpolationsfunktionen für eine mögliche Festlegung einer Zielfarbfunktion, wie sie in Verbindung mit der vorliegenden Erfindung verwendet werden kann;

Fig. 2A: eine beispielhafte Verteilung der Materialdicke als Funktion des Ortes eines prismatischen Glases;

Fig. 2B: ein Schnittbild entlang der waagrechten Achse (x-Achse) durch die Mitte (y=0) des Glases von Fig. 2A;

Fig. 2C: einen Verlauf der Materialdicke für einen Schnitt gemäß Fig. 2B entlang der x-Achse mit y = 0;

Fig. 3A: eine beispielhafte Verteilung der Materialdicke als Funktion des Ortes eines zylindrischen Glases;

Fig. 3B: ein Schnittbild entlang der senkrechten Achse (y-Achse) durch die Mitte (x=0) des Glases von Fig. 3A; und

Fig. 3C: einen Verlauf der Materialdicke für einen Schnitt gemäß Fig. 3B entlang der y-Achse mit x=0.

Bei Materialien, die eine dickenabhängige Eigenfärbung besitzen, kann durch gezieltes ortsaufgelöstes Gegenfärben gezielt eine Zielfärbung oder eine ortsaufgelöste Zielfarbfunktion eingestellt werden. Mit diesem Verfahren ist es möglich von der Materialdicke unabhängige Färbungen zu erzielen.

Die vorliegende Erfindung lässt sich prinzipiell mit allen Färbetechniken anwenden, die ein ortsaufgelöstes Färben ermöglichen. Beispielsweise kann mit folgenden bekannten Färbetechniken gezielt ein ortsaugelöstes Gegenfärben zur Nutzung der vorliegenden Erfindung erzielt werden:

Als eine geeignete Färbetechnik ist das Nidek-Verfahren (z.B. EP0982432B1, EP1905890A2, EP1992734B1, EP2261419B1, EP2532781B1) zu erwähnten:

- Drucken von Sublimationsfarbe auf spezielles Sublimationspapier,
- Übertragung der Farbe vom Sublimationspapier auf die Brillenglasoberfläche im Vakuumofen durch thermisches Aufheizen.
- Tempern der Gläser zum Eindiffundieren der Farbe in die Glasoberfläche.

Außerdem eignet sich eine aus EP1683645B1 bekannte Färbetechnik (Essilor-Verfahren):

- Beschichtung eines Glases mit einem Primerfilms;
- Trocknen des Primerfilms;
- Aufbringen eines porösen farbempfindlichen Films;
- Aufbringen von Farbe (Inkjet-Verfahren);
- Tempern des Glases zum Eindiffundieren der Farbe in die Glasoberfläche;
- Entfernen des porösen farbempfindlichen Films.

Auch hierzu ähnliche Färbetechniken (z.B. Itoh-Verfahren) sind geeignet.

Weitere Färbetechniken sind aus EP2319981B1 und EP2460666B1 (z.T. spezielle High-Index Polymere die ein Färben erlauben):

- Aufbringen eine CAB-Schicht (cellulose acetate butyrate);
- Trocknen der CAB-Schicht;
- Aufdrucken von Sublimationsfarbe;
- Tempern des Glases zum Eindiffundieren der Farbe in die Glasoberfläche;
- Entfernen der CAB-Schicht

Klassisches Färben mittels Tauchfärbebädern ist grundsätzlich zwar mögliche, allerdings ist damit die Flexibilität bei der ortsaufgelösten Farbkorrektur sehr eingeschränkt.

Vorzugsweise wird zunächst einmal das verwendete Glasmaterial bezüglich seiner optischen Eigenschaften charakterisiert. Vorzugsweise erfolgt dies über einen materialspezifischen Eigenfarbvektor

$$\vec{F}(d) := \vec{F_0} + d \cdot \vec{D} \qquad \text{Gleichung (1),}$$

welcher sich aus einem Oberflächenanteil

$$\vec{F_0} := \begin{pmatrix} T_0 \\ a_0^* \\ b_0^* \end{pmatrix} \qquad \text{Gleichung (2)}$$

und einem Volumenanteil

$$\vec{D} := \begin{pmatrix} \Delta T \\ \Delta a^* \\ \Delta b^* \end{pmatrix} \qquad \text{Gleichung(3)}$$

der Eigenfärbung in Abhängigkeit von der Materialdicke $d$ zusammensetzt. Die Darstellung der Eigenfärbung als Vektor erfolgt dabei in dem gewählten, und im Wesentlichen frei wählbaren, Farbraum. Nachfolgend wird beispielhaft der $L^*$ $a^*$ $b^*$ - Farbraum (CIELAB) gewählt. Die Erfindung wäre aber auch mit anderen Farbraummodellen nutzbar, z.B. RGB-Farbraum, CMYK-Farbraum, usw..

Nachfolgend sind drei Beispiele möglicher Glasmaterialien aufgeführt:

Material #1:

Oberflächenanteil:

$$\vec{F_0^{\#1}} := \begin{pmatrix} 92,06 \\ 0,02 \\ 0,31 \end{pmatrix} \qquad \text{Gleichung (4)}$$

Volumenanteil:

$$\vec{D^{\#1}} := \begin{pmatrix} -0,974 \\ -0,060 \\ -0,114 \end{pmatrix} \qquad \text{Gleichung (5)}$$

Material #2:

Oberflächenanteil:

$$\vec{F_0^{\#2}} := \begin{pmatrix} 94,83 \\ -0,35 \\ 1,13 \end{pmatrix} \qquad \text{Gleichung (6)}$$

Volumenanteil:

$$\vec{D^{\#2}} := \begin{pmatrix} -0,252 \\ -0,141 \\ 0,228 \end{pmatrix} \qquad \text{Gleichung (7)}$$

Material #3:

Oberflächenanteil:

$$\vec{F_0^{\#3}} := \begin{pmatrix} 94,84 \\ -0,46 \\ 1,34 \end{pmatrix} \qquad \text{Gleichung (8)}$$

Volumenanteil:

$$\vec{D^{\#3}} := \begin{pmatrix} -0,193 \\ -0,384 \\ -0,600 \end{pmatrix} \qquad \text{Gleichung (9)}$$

Bei einem Referenzwert für die Dicke: $d_{Ref}$ = 8$mm$ (Dicke eines Referenzsubstrats des entsprechenden Materials) ergibt sich als Eigenfärbung des Referenzsubstrats:

Material #1:

$$\overrightarrow{F_8^{\#1}} := \begin{pmatrix} 84{,}26 \\ -0{,}47 \\ -0{,}60 \end{pmatrix} \qquad \text{Gleichung (10)}$$

Material #2:

$$\overrightarrow{F_8^{\#2}} := \begin{pmatrix} 92{,}82 \\ -1{,}48 \\ 2{,}95 \end{pmatrix} \qquad \text{Gleichung (11)}$$

Material #3:

$$\overrightarrow{F_8^{\#3}} := \begin{pmatrix} 92{,}30 \\ -3{,}53 \\ 6{,}14 \end{pmatrix} \qquad \text{Gleichung (12)}$$

Vorzugsweise wird im selben Farbraum zumindest eine Zielfärbung des Glases bestimmt. Dies kann über das ganze Glas verteilt, d.h. in jedem Durchblickpunkt, die gleiche Zielfärbung sein. Die Zielfärbung kann aber auch als ein Farbverlauf bestimmt sein (z.B. oben stärke bzw. dunklere Färbung als unten). Die Zielfärbung stellt den Farbton da, in dem das gesamte, gefärbte Glas am Ende erscheinen soll. Die Darstellung erfolgt in einem gewählten Farbraum.
Beispiel (1):

$$\overrightarrow{Z_{z,1}} := \begin{pmatrix} L_1^* \\ a_1^* \\ b_1^* \end{pmatrix} = \begin{pmatrix} 49{,}57 \\ -0{,}51 \\ 0{,}59 \end{pmatrix} \qquad \text{Gleichung (13)}$$

Dieser Färbungsvektor $\overrightarrow{Z_{z,1}}$ der Zielfärbung soll im Beispiel (1) für alle Auswertungsstellen auf dem Glas gültig sein (homogene Zielfärbung). Somit ist keine ortsabhängige Definition der Zielfärbung $\overrightarrow{Z_{z,1}}$ notwendig.
Im Falle eines zweifarbigen Glases (Bicolorglases) werden vorzugsweise zunächst zwei Durchblickpunkte insbesondere in einem 2-dimensionalen kartesischen Koordinatensystem Auswertungsstellen definiert, dessen Nullpunkt beispielsweise im Kreismittelpunkt des (rohrunden) Glases liegt. Das Glas ist vorzugsweise so orienteiert, dass die cx-Seite senkrecht zur x-y-Ebene liegt und der Nullwinkel nach rechts zeigt. Dies entspricht der Definition gemäß dem sogenannten TABO-Grad-Schema.
Eine erste lokale Zielfärbung für den Durchblickpunkt oben (erster bzw. oberer Referenzpunkt) ist definiert an dem Ort:

$$\overrightarrow{V_O} := \begin{pmatrix} V_{xo} \\ V_{yo} \end{pmatrix} \qquad \text{Gleichung (14)}$$

und der dazu gehörige erste lokale Zielfärbungsvektor durch:

$$\overrightarrow{Z_{O,z}} := \begin{pmatrix} L_O^* \\ a_O^* \\ b_O^* \end{pmatrix} = \begin{pmatrix} 72{,}73 \\ 2{,}54 \\ 10{,}89 \end{pmatrix} \qquad \text{Gleichung(15)}$$

Eine zweite lokale Zielfärbung für den Durchblickpunkt unten (zweiter bzw. unterer Referenzpunkt) ist definiert an dem Ort:

$$\overrightarrow{V_U} := \begin{pmatrix} V_{xU} \\ V_{yU} \end{pmatrix} \qquad \text{Gleichung (16)}$$

und der dazu gehörige zweite lokale Zielfarbevektor durch:

$$\overrightarrow{Z_{U,z}} := \begin{pmatrix} L_U^* \\ a_U^* \\ b_U^* \end{pmatrix} = \begin{pmatrix} 82,72 \\ -2,13 \\ 2,33 \end{pmatrix} \qquad \text{Gleichung (17)}$$

Unter Angabe einer Zielfarbfunktion

$$\overrightarrow{Z_z}(x,y) := \begin{pmatrix} L^*(x,y) \\ a^*(x,y) \\ b^*(x,y) \end{pmatrix} \qquad \text{Gleichung (18)}$$

ist damit zu jeder Position auf dem Glas eine lokale Zielfärbung definierbar.

Beispiel (2):

$$\overrightarrow{V_O} := \begin{pmatrix} 0 \\ V_{yO} \end{pmatrix} \qquad \text{Gleichung (19)}$$

mit

$$V_{yO} = +20,0\ mm \qquad \text{Gleichung (20)}$$

und

$$\overrightarrow{V_U} := \begin{pmatrix} 0 \\ V_{yU} \end{pmatrix} \qquad \text{Gleichung (21)}$$

mit

$$V_{yU} = -20,0\ mm \qquad \text{Gleichung (22)}$$

Als Interpolationsfunktion können grundsätzlich beliebige Funktionen definiert werden, die die gewünschte Farbdichteverteilung am besten beschreiben. Als lineare Interpolation wäre beispielsweise die Funktion

$$I_1(y) := \begin{cases} 0 & y < V_{yU} \\ \frac{y - V_{yU}}{V_{yO} - V_{yU}} & \text{für} \quad V_{yU} \le y \le V_{yO} \\ 1 & y > V_{yO} \end{cases} \qquad \text{Gleichung (23)}$$

wählbar. Weniger harte Übergänge werden beispielsweise durch die folgende Interpolation erreicht.

$$I_2(y) := \begin{cases} 0 & y < V_{yU} \\ \frac{1}{2} \cdot \left(1 + \sin\left(\left(2 \cdot \frac{y - V_{yU}}{V_{yO} - V_{yU}} - 1\right)\frac{\pi}{2}\right)\right) & \text{für} \quad V_{yU} \leq y \leq V_{yO} \\ 1 & y > V_{yO} \end{cases}$$

Gleichung (24)

Die Zielfarbfunktion ist damit für das Beispiel (2) definiert durch:

$$\vec{Z_z}(\vec{x}) := \vec{Z_z}(y) = I_1(y) \cdot \overrightarrow{Z_{O,z}} + \left(1 - I_1(y)\right) \cdot \overrightarrow{Z_{U,z}} \quad \text{Gleichung (25)}$$

oder für weichere Übergänge durch:

$$\vec{Z_z}(\vec{x}) := \vec{Z_z}(y) = I_2(y) \cdot \overrightarrow{Z_{O,z}} + \left(1 - I_2(y)\right) \cdot \overrightarrow{Z_{U,z}} \quad \text{Gleichung (26)}$$

Nachfolgend wird nun beispielhaft beschrieben, wie das ortsabhängige Färben vorzugsweise durchgeführt wird. In einer bevorzugten Ausführungsform werden drei Farbpigmente verwendet, die zum Einstellen der Zielfärbung dienen. Das können beispielsweise drei verschiedene Farbpigmente der Art Rot, Gelb, Blau aber auch beispielsweise Farbpigmente der Art Orange, Gelb, und Blau sein. In einer anderen bevorzugten Ausführungsform werden vier verschiedene Farbpigmente verwendet, z.B. Rot, Orange, Gelb, Blau. In besonderen Ausführungsformen kann aus auch ausreichend sein, wenn nur zwei verschiedene Farbpigmente oder auch nur eine Art von Farbpigmenten verwendet wird. Der Einfachheit halber wird hier beispielhaft angenommen, dass ein Drei-Farbpigment-System mit den Pigmentfarben Rot, Gelb und Blau vorliegt.

Ist ein Pigmentsystem festgelegt worden, so kann die verwendete Pigmentmenge durch einen Pigmentmengenvektor

$$\vec{P} := \begin{pmatrix} P_{Rot} \\ P_{Gelb} \\ P_{Blau} \end{pmatrix} \qquad \text{Gleichung (27)}$$

definiert werden. Vorzugsweise werden die Einheiten von $P_{Rot}$, $P_{Gelb}$ und $P_{Blau}$ in % angeben, wobei 100% eine für das jeweilige Farbpigment einmalig festgelegte Farbpigmentreferenzmenge darstellt.

Um eine Zielfärbung $\vec{Z_z}$ zu erreichen, kann für ein Material und eine Dicke $d$ eines Referenzsubstrats eine Referenzfarbpigmentmenge $\vec{P_r}$ angegeben werden. Die Werte von $\vec{P_r}$ werden vorzugsweise experimentell ermittelt.

Beispiel (1):

Material # 3, Dicke d = 1,5 mm, homogene Färbung:

$$\overrightarrow{Z_{z,1}} := \begin{pmatrix} 49,57 \\ -0,51 \\ 0,59 \end{pmatrix} \qquad \text{Gleichung (28)}$$

$$\overrightarrow{P_{r,1}} = \begin{pmatrix} 38,21\% \\ 48,29\% \\ 58,97\% \end{pmatrix} \qquad \text{Gleichung (29)}$$

Beispiel (2):

Material #3, Dicke $d$ = 1,5 $mm$, ortsabhängige Färbung oben:

$$\overrightarrow{Z_{O,z}} := \begin{pmatrix} 72,73 \\ 2,54 \\ 10,89 \end{pmatrix} \qquad \text{Gleichung (30)}$$

$$\overrightarrow{P_{O,r}} = \begin{pmatrix} 18,16\% \\ 34,08\% \\ 6,30\% \end{pmatrix} \qquad \text{Gleichung (31)}$$

Material # 3, Dicke $d$ = 1,5 mm ortsabhängige Färbung unten:

$$\overrightarrow{Z_{U,z}} := \begin{pmatrix} 82,72 \\ -2,13 \\ 2,33 \end{pmatrix} \qquad \text{Gleichung (32)}$$

$$\overrightarrow{P_{U,r}} = \begin{pmatrix} 1,74\% \\ 6,77\% \\ 6,26\% \end{pmatrix} \qquad \text{Gleichung (33)}$$

In der Umgebung der Zielfärbung $\overrightarrow{Z_z}$ kann über die Abweichung der Farbänderung $\overrightarrow{Z}$ - $\overrightarrow{Z_z}$ die Änderung der Farbpigmente ($\overrightarrow{P}$ - $\overrightarrow{P_r}$) beschrieben werden. Vorzugsweise wird die Färbung in dieser Umgebung durch den linearen Zusammenhang:

$$\vec{P} = \overrightarrow{P_r} + \overleftrightarrow{M} \cdot \left( \vec{Z} - \overrightarrow{Z_z} \right) \qquad \text{Gleichung (34)}$$

beschrieben werden. In dieser Gleichung ist $\overleftrightarrow{M}$ vorzugsweise eine 3x3-Matrix deren Einträge vorzugweise experimentell ermittelt werden. Matrixeinträge haben insbesondere die Einheit von Farb% pro L*a*b*-Einheit. Diese Pigmentmengen-korrekturmatrix $\overleftrightarrow{M}$ kann für jede gewünschte Zielfärbung, insbesondere unabhängig von dem im Einzelfall gewählten Glasmaterial und der konkreten Glasdicke (also unabhängig von einer Eigenfärbung des Glaskörpers) einmal festgelegt werden.

Beispiel (1):

Material # 3, homogene Zielfärbung $\overrightarrow{Z_{z,1}}$:

$$\vec{M} := \begin{pmatrix} -0,389 & -0,524 & -0,589 \\ 0,289 & -0,145 & -0,488 \\ 0,118 & 0,677 & -0,243 \end{pmatrix} \qquad \text{Gleichung (35)}$$

Beispiel (2):

Material # 3, Zielfärbung Oben $\overrightarrow{Z_{O,z}}$:

$$\overrightarrow{M_O} := \begin{pmatrix} -0,279 & -0,375 & -0,388 \\ 0,276 & -0,137 & -0,462 \\ 0,074 & 0,608 & -0,226 \end{pmatrix} \qquad \text{Gleichung (36)}$$

Material # 3, Zielfärbung Unten $\overrightarrow{Z_{U,z}}$:

$$\overrightarrow{M_U} := \begin{pmatrix} -0,256 & -0,323 & -0,389 \\ 0,282 & -0,111 & -0,441 \\ 0,104 & 0,544 & -0,235 \end{pmatrix} \qquad \text{Gleichung (37)}$$

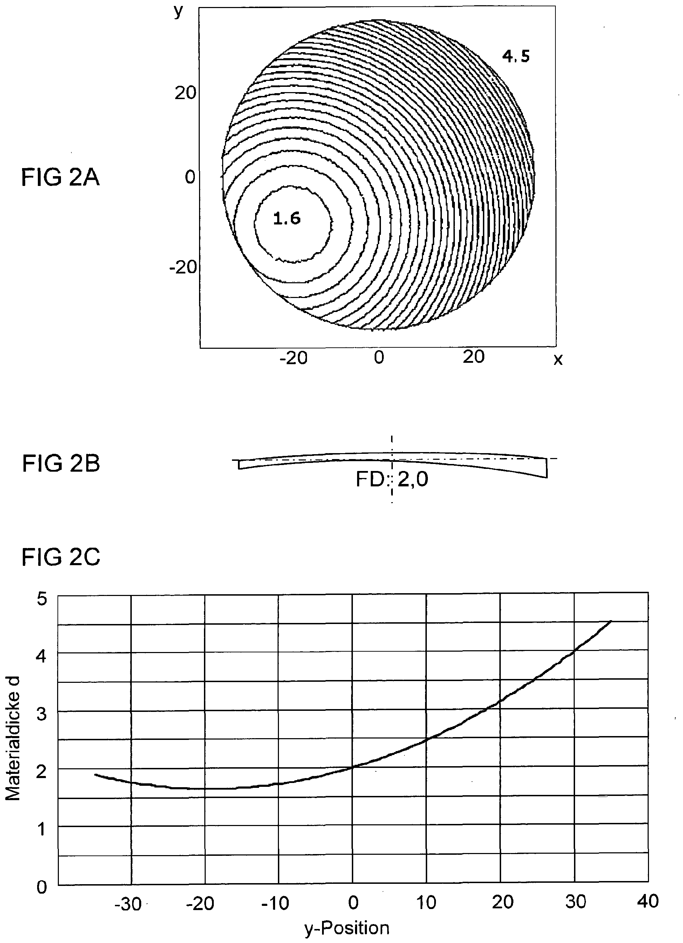

Um nun eine geeignete Farbkorrektur für ein zu färbendes Glas zu ermitteln, wird zunächst die konkrete Eigenfärbung des Glasmaterials ermittelt. Fig. 2A stellt ein Dickenprofil eines ersten beispielhaften prismatischen Glases dar. Die Linien repräsentieren den Verlauf konstanter Dicken. Fig. 2B stellt einen Querschnitt durch das Glas entlang der x-Achse mit y=0 (d.h. durch die Mitte des rohrunden Glases) dar. Im Allgemeinen ist die Materialdicke *d* eine Funktion des Ortes d(x). In Fig. 2C ist für das erste beispielhafte Glas die Dicke als Funktion des Ortes entlang des Schnittes aus Fig. 2B gegeben. Die nachfolgende Tabelle gibt die Materialdicken für diesen Schnitt an der Position x in 5mm-Schritten an:

*Tabelle 1: Materialdicken für einen Schnitt entlang der x-Achse mit y=0 in 5mm Schritten.*

| x[mm] | d[mm] |
|-------|-------|
| -35 | 1,9 |
| -30 | 1,76 |
| -25 | 1,68 |
| -20 | 1,65 |
| -15 | 1,66 |
| -10 | 1,73 |
| -5 | 1,84 |
| 0 | 2 |
| 5 | 2,21 |
| 10 | 2,47 |
| 15 | 2,77 |
| 20 | 3,13 |
| 25 | 3,54 |
| 30 | 3,99 |
| 35 | 4,5 |

Weiterhin wird in diesem Beispiel angenommen, dass das Material #3 verwendet wird.

Somit ist für die dickenabhängige Eigenfärbung $\vec{D} = \overrightarrow{D^{\#3}}$ Gleichung (9) anwendbar. Die ortsabhängige Farbverschiebung, die das Glas dadurch erfährt, ist demnach:

$$\Delta\vec{F}(\vec{x}) = d(\vec{x}) \cdot \vec{D} \qquad \text{Gleichung (38)}$$

Somit ist die Farbverschiebung entlang der x-Achse gegeben durch folgende Tabellenwerte:

*Tabelle 2: Materialdicken und die Farbverschiebung ΔL\*, Δa\*, Δb\* bei Verwendung des Materials #3 für einen Schnitt entlang der x-Achse mit y=0 in 5mm Schritten. Die Referenzdicke der Farbverschiebung ist hierbei beispielsweise 1,5mm.*

| x[mm] | d[mm] | Δ L* | Δa* | Δb* |
|-------|-------|------|------|------|
| -35 | 1,9 | -0,077 | -0,154 | 0,240 |
| -30 | 1,76 | -0,050 | -0,100 | 0,156 |
| -25 | 1,68 | -0,035 | -0,069 | 0,108 |

(fortgesetzt)

| x[mm] | d[mm] | Δ L* | Δa* | Δb* |
|---|---|---|---|---|
| -20 | 1,65 | -0,029 | -0,058 | 0,090 |
| -15 | 1,66 | -0,031 | -0,061 | 0,096 |
| -10 | 1,73 | -0,044 | -0,088 | 0,138 |
| -5 | 1,84 | -0,066 | -0,131 | 0,204 |
| 0 | 2 | -0,097 | -0,192 | 0,300 |
| 5 | 2,21 | -0,137 | -0,273 | 0,426 |
| 10 | 2,47 | -0,187 | -0,372 | 0,582 |
| 15 | 2,77 | -0,245 | -0,488 | 0,762 |
| 20 | 3,13 | -0,315 | -0,626 | 0,978 |
| 25 | 3,54 | -0,394 | -0,783 | 1,224 |
| 30 | 3,99 | -0,481 | -0,956 | 1,494 |
| 35 | 4,5 | -0,580 | -1,152 | 1,800 |

Um diese Farbverschiebung zumindest teilweise zu kompensieren wird nun auf der Glasvorderseite und/oder auf der Glasrückseite, insbesondere durch eine Linearkombination aus Vorder- und Rückseite die Oberflächenfärbung so korrigiert, dass insgesamt zumindest annähernd die Zielfärbung erreicht wird. Als Zielfärbung soll hier die gemäß Beispiel (1) angegebene Zielfärbung erreicht werden. Die Gesamtfärbung in Transmission wird somit unabhängig von der Glasdicke und im Falle einer homogenen Färbung auch noch unabhängig von der Position $\vec{x}$ auf dem Glas. Für jede Position auf dem Glas lässt sich nun die Farbpigmentmenge angeben um die Zielfärbung an diesem Ort unabhängig von der Vorfärbung zu erreichen.

Aus den Gleichungen (29), (35) und (38) ergibt sich für das Beispiel (1):

$$\vec{P_z}(\vec{x}) := \vec{P_r} - \vec{M} \cdot \Delta \vec{F}(\vec{x}) \qquad \text{Gleichung (39)}.$$

Damit ergaben sich folgende Farbpigmentmengen für das Material #3 bei der Färbung nach Beispiel (1) für einen Schnitt entlang der x-Achse mit y=0 in 5 mm Schritten:

*Tabelle 3: Materialdicken und die Farbpigmentmengen Rot[%], Gelb[%] und Blau[%] für das Material #3 und der Färbung gemäß Beispiel (1) für einen Schnitt entlang der x-Achse mit y= 0 in 5mm Schritten.*

| x[mm] | d[mm] | Rot[%] | Gelb[%] | Blau[%] |
|---|---|---|---|---|
| -35 | 1,9 | 38,24 | 48,41 | 59,15 |
| -30 | 1,76 | 38,23 | 48,37 | 59,09 |
| -25 | 1,68 | 38,23 | 48,34 | 59,05 |
| -20 | 1,65 | 38,23 | 48,33 | 59,04 |
| -15 | 1,66 | 38,23 | 48,34 | 59,04 |
| -10 | 1,73 | 38,23 | 48,36 | 59,07 |
| -5 | 1,84 | 38,24 | 48,39 | 59,12 |
| 0 | 2 | 38,25 | 48,44 | 59,19 |
| 5 | 2,21 | 38,27 | 48,50 | 59,28 |
| 10 | 2,47 | 38,29 | 48,58 | 59,39 |
| 15 | 2,77 | 38,31 | 48,66 | 59,52 |
| 20 | 3,13 | 38,34 | 48,77 | 59,67 |

EP 3 574 292 B1

(fortgesetzt)

| x[mm] | d[mm] | Rot[%] | Gelb[%] | Blau[%] |
|---|---|---|---|---|
| 25 | 3,54 | 38,37 | 48,89 | 59,85 |
| 30 | 3,99 | 38,41 | 49,02 | 60,04 |
| 35 | 4,5 | 38,44 | 49,18 | 60,26 |

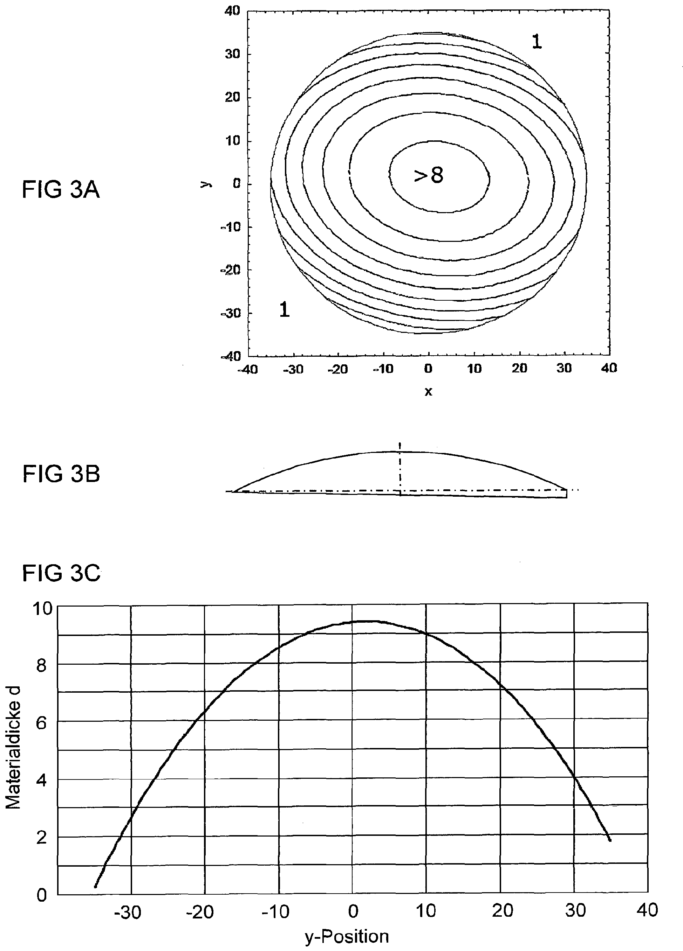

Fig. 3A stellt ein Dickenprofil eines zweiten beispielhaften zylindrischen Glases mit hoher +Wirkung dar. Die Linien repräsentieren den Verlauf konstanter Dicken. Fig. 3B stellt einen Querschnitt durch das zweite beispielhafte Glas entlang der y-Achse mit x=0 (d.h. durch die Mitte des rohrunden Glases) dar. Im Allgemeinen ist die Materialdicke $d$ eine Funktion des Ortes $d(\vec{x})$. In Fig. 3C ist für das zweite beispielhafte Glas die Dicke als Funktion des Ortes entlang des Schnittes aus Fig. 3B gegeben. Die nachfolgende Tabelle gibt die Materialdicken für diesen Schnitt in 5mm-Schritten an:

*Tabelle 4: Materialdicken für einen Schnitt entlang der y-Achse mit x=0 in 5mm Schritten.*

| y[mm] | d[mm] |
|---|---|
| -35 | 0,25 |
| -30 | 2,69 |
| -25 | 4,71 |
| -20 | 6,34 |
| -15 | 7,61 |
| -10 | 8,53 |
| -5 | 9,13 |
| 0 | 9,4 |
| 5 | 9,35 |
| 10 | 8,97 |
| 15 | 8,26 |
| 20 | 7,21 |
| 25 | 5,8 |
| 30 | 4 |
| 35 | 1,78 |

Ebenso wie im vorangegangenen Beispiel wird in diesem Beispiel nachfolgend angenommen, dass das Material #3 verwendet wird. Somit ist für die dickenabhängige Eigenfärbung $\vec{D} = \overrightarrow{D^{\#3}}$ Gleichung (9) anwendbar. Die ortsabhängige Farbverschiebung, die das Glas dadurch erfährt, ist demnach wiederum durch Gleichung (38) definiert:

$$\Delta\vec{F}(\vec{x}) = d(\vec{x}) \cdot \vec{D}$$

Somit ist die Farbverschiebung entlang der y-Achse gegeben durch folgende Tabellenwerte:

*Tabelle 5: Materialdicken und die Farbverschiebung $\Delta L^*$, $\Delta a^*$, $\Delta b^*$ bei Verwendung des Materials #3 für einen Schnitt entlang der y-Achse mit x=0 in 5mm Schritten. Die Referenzdicke der Farbverschiebung ist hierbei beispielsweise 1, 5mm.*

| Y[mm] | d[mm] | $\Delta L^*$ | $\Delta a^*$ | $\Delta b^*$ |
|---|---|---|---|---|
| -35 | 0,25 | 0,242 | 0,480 | -0,750 |

14

(fortgesetzt)

| Y[mm] | d[mm] | Δ L* | Δa* | Δb* |
|---|---|---|---|---|
| -30 | 2,69 | -0,230 | -0,457 | 0,714 |
| -25 | 4,71 | -0,620 | -1,232 | 1,926 |
| -20 | 6,34 | -0,935 | -1,858 | 2,904 |
| -15 | 7,61 | -1,181 | -2,346 | 3,666 |
| -10 | 8,53 | -1,358 | -2,699 | 4,218 |
| -5 | 9,13 | -1,474 | -2,929 | 4,578 |
| 0 | 9,4 | -1,526 | -3,033 | 4,740 |
| 5 | 9,35 | -1,517 | -3,014 | 4,710 |
| 10 | 8,97 | -1,443 | -2,868 | 4,482 |
| 15 | 8,26 | -1,306 | -2,595 | 4,056 |
| 20 | 7,21 | -1,103 | -2,192 | 3,426 |
| 25 | 5,8 | -0,831 | -1,651 | 2,580 |
| 30 | 4 | -0,483 | -0,960 | 1,500 |
| 35 | 1,78 | -0,054 | -0,108 | 0,168 |

Nun wird entweder auf der Glasvorderseite oder auf der Glasrückseite oder einer Linearkombination aus Vorder- und Rückseite die Oberflächenfärbung korrigiert, um die Gesamtfärbung möglichst gut an die gewünschte Zielfärbung zu nähern. Da in dem hier beschriebenen Beispiel eine Bicolorfärbung gemäß der oben als Beispiel (2) angegebenen Zielfärbung erreicht werden soll, wird zunächst angenommen, dass diese Zielfärbung sich ausgehend von zwei homogene Unifärbungen beschreiben lässt. Für jede Position auf dem Glas lässt sich nun die Farbpigmentmenge der Färbungen Oben (O) und Unten (U) angeben.

Aus den Gleichungen (31), (36) und (38) ergibt sich für das Beispiel (2) für die obere Zielfarbpigmentmenge:

$$\overrightarrow{P_{O,z}}(\vec{x}) := \overrightarrow{P_{O,r}} - \overleftrightarrow{M_O} \cdot \Delta\vec{F}(\vec{x}) \qquad \text{Gleichung (40).}$$

Aus den Gleichungen (33), (37) und (38) ergibt sich für das Beispiel (2) für die untere Zielfarbpigmentmenge:

$$\overrightarrow{P_{U,z}}(\vec{x}) := \overrightarrow{P_{U,r}} - \overleftrightarrow{M_U} \cdot \Delta\vec{F}(\vec{x}) \qquad \text{Gleichung (41).}$$

Für die Farbpigmentmengen der beiden Teilfärbungen ergeben sich entlang der y-Achse (bei x=0) somit folgende Werte:

*Tabelle 6: Materialdicken und die Farbpigmentmengen Rot[%], Gelb[%] und Blau[%] für das Material #3 und der Färbung Oben und Färbung Unten für einen Schnitt entlang der y-Achse mit x= 0 in 5mm Schritten.*

| | | Oben | | | Unten | | |
|---|---|---|---|---|---|---|---|
| Y[mm] | d[mm] | Rot[%] | Gelb[%] | Blau[%] | Rot[%] | Gelb[%] | Blau[%] |
| -35 | 0,25 | 18,11 | 34,20 | 6,45 | 1,67 | 6,88 | 6,41 |
| -30 | 2,69 | 18,20 | 34,16 | 6,40 | 1,82 | 6,84 | 6,35 |
| -25 | 4,71 | 18,27 | 34,13 | 6,37 | 1,94 | 6,82 | 6,32 |
| -20 | 6,34 | 18,33 | 34,13 | 6,35 | 2,03 | 6,81 | 6,31 |
| -15 | 7,61 | 18,37 | 34,13 | 6,36 | 2,11 | 6,82 | 6,32 |
| -10 | 8,53 | 18,40 | 34,15 | 6,38 | 2,16 | 6,83 | 6,34 |

(fortgesetzt)

| Y[mm] | d[mm] | Oben | | | Unten | | |
|---|---|---|---|---|---|---|---|
| | | Rot[%] | Gelb[%] | Blau[%] | Rot[%] | Gelb[%] | Blau[%] |
| -5 | 9,13 | 18,43 | 34,18 | 6,43 | 2,20 | 6,86 | 6,38 |
| 0 | 9,4 | 18,44 | 34,22 | 6,49 | 2,22 | 6,91 | 6,44 |
| 5 | 9,35 | 18,43 | 34,28 | 6,57 | 2,21 | 6,97 | 6,52 |
| 10 | 8,97 | 18,42 | 34,35 | 6,67 | 2,19 | 7,04 | 6,62 |
| 15 | 8,26 | 18,39 | 34,44 | 6,78 | 2,15 | 7,12 | 6,73 |
| 20 | 7,21 | 18,36 | 34,54 | 6,92 | 2,09 | 7,22 | 6,86 |
| 25 | 5,8 | 18,31 | 34,65 | 7,08 | 2,00 | 7,33 | 7,01 |
| 30 | 4 | 18,24 | 34,77 | 7,25 | 1,89 | 7,46 | 7,18 |
| 35 | 1,78 | 18,17 | 34,92 | 7,45 | 1,76 | 7,60 | 7,37 |

Analog zu der Interpolationsformel für die interpolierten Zielfärbungen der Gleichungen (25) und (26) können die Farbpigmentmengen ebenso interpoliert werden.

$$\vec{P_z}(\vec{x}) := \vec{P_z}(y) = I_2(y) \cdot \vec{P_{O,z}} + \left(1 - I_2(y)\right) \cdot \vec{P_{U,z}} \quad \text{Gleichung (42)}$$

Der Farbpigmentanteil der Oberen (ersten) Teilfärbung kann damit wie folgt angegeben werden:

Tabelle 7: Anteil der Farbpigmente aus dem Anteil Oben

| Y[mm] | Oben | | | I2 | Anteil Oben | | |
|---|---|---|---|---|---|---|---|
| | Rot[%] | Gelb[%] | Blau[%] | | Rot[%] | Gelb[%] | Blau[%] |
| -35 | 18,11 | 34,20 | 6,45 | 0,000 | 0,00 | 0,00 | 0,00 |
| -30 | 18,20 | 34,16 | 6,40 | 0,000 | 0,00 | 0,00 | 0,00 |
| -25 | 18,27 | 34,13 | 6,37 | 0,000 | 0,00 | 0,00 | 0,00 |
| -20 | 18,33 | 34,13 | 6,35 | 0,000 | 0,00 | 0,00 | 0,00 |
| -15 | 18,37 | 34,13 | 6,36 | 0,038 | 0,70 | 1,30 | 0,24 |
| -10 | 18,40 | 34,15 | 6,38 | 0,146 | 2,70 | 5,00 | 0,94 |
| -5 | 18,43 | 34,18 | 6,43 | 0,309 | 5,69 | 10,55 | 1,98 |
| 0 | 18,44 | 34,22 | 6,49 | 0,500 | 9,22 | 17,11 | 3,24 |
| 5 | 18,43 | 34,28 | 6,57 | 0,691 | 12,74 | 23,70 | 4,54 |
| 10 | 18,42 | 34,35 | 6,67 | 0,854 | 15,72 | 29,32 | 5,69 |
| 15 | 18,39 | 34,44 | 6,78 | 0,962 | 17,69 | 33,13 | 6,52 |
| 20 | 18,36 | 34,54 | 6,92 | 1,000 | 18,36 | 34,54 | 6,92 |
| 25 | 18,31 | 34,65 | 7,08 | 1,000 | 18,31 | 34,65 | 7,08 |
| 30 | 18,24 | 34,77 | 7,25 | 1,000 | 18,24 | 34,77 | 7,25 |
| 35 | 18,17 | 34,92 | 7,45 | 1,000 | 18,17 | 34,92 | 7,45 |

Der Farbpigmentanteil der Unteren (zweiten) Teilfärbung kann damit wie folgt angegeben werden:

*Tabelle 8: Anteil der Farbpigmente aus dem Anteil Unten*

| Y[mm] | Unten | | | 1.0 -I2 | Anteil Unten | | |
|---|---|---|---|---|---|---|---|
| | Rot[%] | Gelb[%] | Blau[%] | | Rot[%] | Gelb[%] | Blau[%] |
| -35 | 1,67 | 6,88 | 6,41 | 1,000 | 1,67 | 6,88 | 6,41 |
| -30 | 1,82 | 6,84 | 6,35 | 1,000 | 1,82 | 6,84 | 6,35 |
| -25 | 1,94 | 6,82 | 6,32 | 1,000 | 1,94 | 6,82 | 6,32 |
| -20 | 2,03 | 6,81 | 6,31 | 1,000 | 2,03 | 6,81 | 6,31 |
| -15 | 2,11 | 6,82 | 6,32 | 0,962 | 2,03 | 6,56 | 6,08 |
| -10 | 2,16 | 6,83 | 6,34 | 0,854 | 1,85 | 5,83 | 5,41 |
| -5 | 2,20 | 6,86 | 6,38 | 0,691 | 1,52 | 4,75 | 4,41 |
| 0 | 2,22 | 6,91 | 6,44 | 0,500 | 1,11 | 3,45 | 3,22 |
| 5 | 2,21 | 6,97 | 6,52 | 0,309 | 0,68 | 2,15 | 2,01 |
| 10 | 2,19 | 7,04 | 6,62 | 0,146 | 0,32 | 1,03 | 0,97 |
| 15 | 2,15 | 7,12 | 6,73 | 0,038 | 0,08 | 0,27 | 0,26 |
| 20 | 2,09 | 7,22 | 6,86 | 0,000 | 0,00 | 0,00 | 0,00 |
| 25 | 2,00 | 7,33 | 7,01 | 0,000 | 0,00 | 0,00 | 0,00 |
| 30 | 1,89 | 7,46 | 7,18 | 0,000 | 0,00 | 0,00 | 0,00 |
| 35 | 1,76 | 7,60 | 7,37 | 0,000 | 0,00 | 0,00 | 0,00 |

*Tabelle 9: Gesamte Farbpigmentmengen Rot[%], Gelb[%] und Blau[%] für das Material #3 und der Färbung 1 (Beispiel (1)) für einen Schnitt entlang der y-Achse mit x= 0 in 5mm Schritten.*

| Y[mm] | Gesamt | | |
|---|---|---|---|
| | Rot[%] | Gelb[%] | Blau[%] |
| -35 | 1,67 | 6,88 | 6,41 |
| -30 | 1,82 | 6,84 | 6,35 |
| -25 | 1,94 | 6,82 | 6,32 |
| -20 | 2,03 | 6,81 | 6,31 |
| -15 | 2,73 | 7,85 | 6,32 |
| -10 | 4,54 | 10,83 | 6,35 |
| -5 | 7,21 | 15,30 | 6,40 |
| 0 | 10,33 | 20,57 | 6,47 |
| 5 | 13,43 | 25,85 | 6,55 |
| 10 | 16,04 | 30,35 | 6,66 |
| 15 | 17,78 | 33,40 | 6,78 |
| 20 | 18,36 | 34,54 | 6,92 |
| 25 | 18,31 | 34,65 | 7,08 |
| 30 | 18,24 | 34,77 | 7,25 |
| 35 | 18,17 | 34,92 | 7,45 |

Auch wenn bevorzugte Ausführungsformen beispielhaft anhand eines Farbraumvektors im L*a*b*-Farbraum und durch Färbung mit Farbpigmenten der Art Rot, Gelb und Blau beschrieben wurden, ist die Erfindung nicht auf diese Farbraumdarstellung oder die beispielhaft beschriebene Farbpigmentauswahl beschränkt. Stattdessen kann die Erfindung auch in anderen Farbraummodellen und mit anderen Grundfarben analog angewandt werden. Die Erfindung ist auch nicht auf die Verwendung von 3 Grundfarben beschränkt. Insbesondere ist die Erfindung auch auf Färbeverfahren anwendbar, bei welchen die Zielfärbung mit 4 oder mehr Grundfarben hergestellt wird. In diesem Fall wird lediglich die Dimension des Farbpigmentmengenvektors $\vec{P}$ und der Pigmentmengenkorrekturmatrix $\overleftrightarrow{M}$ entsprechend angepasst. Sofern das Material und drei Farben vorgegeben sind ergibt sich immer ein eindeutiges Ergebnis. Würde etwa ein Farbpigment oder eine Mischung von Farbpigmenten zur Verfügung gestellt werden, die einen exakten Ausgleich der Gegenfärbung darstellt, so vereinfacht sich das Problem auf das lokale gegenfärben Mittels Farbe bzw. des Farbgemischs. Nachteil eines solchen fest definierten Farbgemischs ist, dass etwaige Anpassungen nachträglich nicht möglich sind. Dieses Verfahren kommt jedoch ohne eine Anpassungsfarbe aus.


**Patentansprüche**

1. Verfahren zum Färben eines optischen Glases, insbesondere eines Brillenglases, welches ein vorbestimmtes Glasmaterial umfasst, zum Erreichen einer Zielfärbung des optischen Glases, wobei das Verfahren umfasst:

   - Bestimmen einer materialspezifischen Eigenfärbung des vorbestimmten Glasmaterials;
   - Bestimmen einer Glasdicke an einer Vielzahl von Auswertungsstellen auf dem optischen Glas;
   - Ermitteln einer Eigenfärbung des optischen Glases aus der materialspezifischen Eigenfärbung des vorbestimmten Glasmaterials und der Glasdicke an der Vielzahl von Auswertungsstellen auf dem optischen Glas;
   - Bestimmen einer Referenzfarbpigmentmenge für zumindest ein Farbpigment derart, dass die Referenzfarbpigmentmenge auf einem Referenzsubstrat aufgebracht für das Referenzsubstrat die am optischen Glas zu erreichende Zielfärbung bewirkt;
   - Festlegen eines Farbkorrekturmodells, welches einen Zusammenhang zwischen einer Abweichung einer Farbpigmentmenge für zumindest ein Farbpigment von der Referenzfarbpigmentmenge des zumindest einen Farbpigments und einer daraus resultierenden Abweichung einer Färbung des Referenzsubstrats von der Zielfärbung beschreibt; und
   - Bestimmen einer Zielfarbpigmentmenge, welche von der Referenzfarbpigmentmenge um eine Farbpigmentmengenkorrektur abweicht, welche gemäß dem festgelegten Farbkorrekturmodell die ermittelte Eigenfärbung des optischen Glases kompensiert.

2. Verfahren nach Anspruch 1, wobei das Material des Referenzsubstrats dem vorbestimmten Glasmaterial entspricht.

3. Verfahren nach Anspruch 1 oder 2, wobei das Bestimmen einer Glasdicke an einer Vielzahl von Auswertungsstellen auf dem optischen Glas ein Ermitteln einer Abweichung $\Delta d$ der Glasdicke des optischen Glases an einer Vielzahl von Auswertungsstellen auf dem optischen Glas von einer Dicke des Referenzsubstrats umfasst, und wobei das Ermitteln einer Eigenfärbung des optischen Glases ein Ermitteln einer Abweichung $\Delta\vec{F}$ einer Eigenfärbung des optischen Glases von einer Eigenfärbung des Referenzsubstrats anhand der ermittelten Abweichung $\Delta d$ der Dicke des optischen Glases von einer Dicke des Referenzsubstrats gemäß

$$\Delta\vec{F} = \Delta d \cdot \vec{D}$$

mit einem Volumenfarbvektor $\vec{D}$ umfasst.

4. Verfahren nach einem der vorangegangenen Ansprüche, wobei das Festlegen eines Farbkorrekturmodells ein Bestimmen einer Pigmentmengenkorrekturmatrix $\overleftrightarrow{M}$ derart umfasst, dass der Zusammenhang zwischen einer Abweichung $\Delta\vec{P} = \vec{P} - \vec{P_r}$ einer Farbpigmentmenge $\vec{P}$ für zumindest ein Farbpigment von der Referenzfarbpigmentmenge $\vec{P_r}$ des zumindest einen Farbpigments und einer daraus resultierenden Abweichung $\Delta\vec{Z} = \vec{Z} - \vec{Z_z}$ einer Färbung $\vec{Z}$ des Referenzsubstrats von der Zielfärbung $\vec{Z_z}$ durch

$$\Delta\vec{P} = \overleftrightarrow{M} \cdot \Delta\vec{Z}$$

beschrieben wird.

**5.** Verfahren nach Anspruch 4, wobei die Pigmentmengenkorrekturmatrix $\overleftrightarrow{M}$ am Referenzsubstrat experimentell ermittelt wird.

**6.** Verfahren nach Anspruch 4 oder 5 in Verbindung mit Anspruch 3, wobei das Bestimmen einer Zielfarbpigmentmenge $\overrightarrow{P_z}$ gemäß

$$\overrightarrow{P_z} = \overrightarrow{P_r} - \overleftrightarrow{M} \cdot \Delta\vec{F}$$

erfolgt.

**7.** Verfahren nach einem der vorangegangenen Ansprüche, wobei das Bestimmen einer Glasdicke an einer Vielzahl von Auswertungsstellen auf dem optischen Glas anhand von Datensätzen eines optischen Berechnungs- und Optimierungsverfahrens zumindest einer Glasoberfläche des optischen Glases erfolgt.

**8.** Verfahren nach einem der vorangegangenen Ansprüche, wobei die für das optische Glas zu erreichende Zielfärbung $\overrightarrow{Z_z}$ gemäß

$$\overrightarrow{Z_z}(\vec{x}) = I(\vec{x}) \cdot \overrightarrow{Z_{O,z}} + \left(1 - I(\vec{x})\right) \cdot \overrightarrow{Z_{U,z}}$$

mit einer an einer ersten Auswertungsstelle $\overrightarrow{x_O}$ auf dem optischen Glas zu erreichenden ersten Zielfärbung $\overrightarrow{Z_{O,z}}$, einer an einer zweiten Auswertungsstelle $\overrightarrow{x_U}$ auf dem optischen Glas zu erreichenden zweiten Zielfärbung $\overrightarrow{Z_{U,z}}$ und einer Interpolationsfunktion $I(\vec{x})$, welche $I(\overrightarrow{x_O}) = 1$ und $I(\overrightarrow{x_U}) = 0$ erfüllt, von einer Position x auf dem optischen Glas abhängt, und
wobei das Bestimmen einer Referenzfarbpigmentmenge umfasst:

- Bestimmen einer ersten Referenzfarbpigmentmenge $\overrightarrow{P_{O,r}}$ derart, dass die erste Referenzfarbpigmentmenge $\overrightarrow{P_{O,r}}$ auf dem Referenzsubstrat aufgebracht für das Referenzsubstrat die am optischen Glas zu erreichende erste Zielfärbung $\overrightarrow{Z_{O,z}}$ bewirkt; und
- Bestimmen einer zweiten Referenzfarbpigmentmenge $\overrightarrow{P_{U,r}}$ derart, dass die zweite Referenzfarbpigmentmenge $\overrightarrow{P_{U,r}}$ auf dem Referenzsubstrat aufgebracht für das Referenzsubstrat die am optischen Glas zu erreichende zweite Zielfärbung $\overrightarrow{Z_{U,z}}$ bewirkt.

**9.** Verfahren nach Anspruch 8, wobei das Festlegen eines Farbkorrekturmodells umfasst:

- Bestimmen einer ersten Pigmentmengenkorrekturmatrix $\overleftrightarrow{M_O}$ derart, dass der Zusammenhang zwischen einer ersten Abweichung $\Delta\overrightarrow{P_O} = \overrightarrow{P_O} - \overrightarrow{P_{O,z}}$ einer ersten Farbpigmentmenge $\overrightarrow{P_O}$ für zumindest ein Farbpigment von der ersten Referenzfarbpigmentmenge $\overrightarrow{P_{O,r}}$ des zumindest einen Farbpigments und einer daraus resultierenden ersten Abweichung $\Delta\overrightarrow{Z_O} = \overrightarrow{Z_O} - \overrightarrow{Z_{O,z}}$ einer ersten Färbung $\overrightarrow{Z_O}$ des Referenzsubstrats von der ersten Zielfärbung $\overrightarrow{Z_{O,z}}$ durch

$$\Delta\overrightarrow{P_O} = \overleftrightarrow{M_O} \cdot \Delta\overrightarrow{Z_O}$$

beschrieben wird; und
- Bestimmen einer zweiten Pigmentmengenkorrekturmatrix $\overleftrightarrow{M_U}$ derart, dass der Zusammenhang zwischen einer Abweichung $\Delta\overrightarrow{P_U} = \overrightarrow{P_U} - \overrightarrow{P_{U,z}}$ einer zweiten Farbpigmentmenge $\overrightarrow{P_U}$ für zumindest ein Farbpigment von der zweiten Referenzfarbpigmentmenge $\overrightarrow{P_{U,z}}$ des zumindest einen Farbpigments und einer daraus resultierenden zweiten Abweichung $\Delta\overrightarrow{Z_U} = \overrightarrow{Z_U} - \overrightarrow{Z_{U,z}}$ einer zweiten Färbung $\overrightarrow{Z_U}$ des Referenzsubstrats von der zweiten Zielfärbung $\overrightarrow{Z_{U,z}}$ durch

$$\Delta\overrightarrow{P_U} = \overleftrightarrow{M_U} \cdot \Delta\overrightarrow{Z_U}$$

beschrieben wird.

**10.** Verfahren nach Anspruch 9 in Verbindung mit Anspruch 3, wobei das Bestimmen einer Zielfarbpigmentmenge umfasst:

- Bestimmen einer ersten Zielfarbpigmentteilmenge $\overrightarrow{P_{O,k}}$ gemäß

$$\overrightarrow{P_{O,z}} = \overrightarrow{P_O} - \overleftarrow{M_O} \cdot \Delta\vec{F};$$

- Bestimmen einer zweiten Zielfarbpigmentteilmenge $\overrightarrow{P_{U,k}}$ gemäß

$$\overrightarrow{P_{U,z}} = \overrightarrow{P_U} - \overleftarrow{M_U} \cdot \Delta\vec{F};$$

und
- Bestimmen der Zielfarbpigmentmenge $\overrightarrow{P_z}$ gemäß

$$\overrightarrow{P_z} = I(\vec{x}) \cdot \overrightarrow{P_{O,z}} + \left(1 - I(\vec{x})\right) \cdot \overrightarrow{P_{U,z}}$$

**11.** Verfahren nach einem der vorangegangenen Ansprüche, welches außerdem ein Aufbringen der Zielfarbpigmentmenge auf zumindest eine Oberfläche des optischen Glases umfasst.

**12.** Färbesystem zum Färben eines optischen Glases, insbesondere eines Brillenglases, welches ein vorbestimmtes Glasmaterial umfasst, zum Erreichen einer Zielfärbung des optischen Glases, wobei das System umfasst:

- ein Glasmaterialdatenmodul zum Bestimmen einer materialspezifischen Eigenfärbung des vorbestimmten Glasmaterials;
- ein Glasdickenmodul zum Bestimmen einer Glasdicke an einer Vielzahl von Auswertungsstellen auf dem optischen Glas;
- ein Eigenfärbungsermittlungsmodul zum Ermitteln einer Eigenfärbung des optischen Glases aus der materialspezifischen Eigenfärbung des vorbestimmten Glasmaterials und der Glasdicke an der Vielzahl von Auswertungsstellen auf dem optischen Glas;
- ein Referenzmodul zum Bestimmen einer Referenzfarbpigmentmenge für zumindest ein Farbpigment derart, dass die Referenzfarbpigmentmenge auf einem Referenzsubstrat aufgebracht für das Referenzsubstrat die am optischen Glas zu erreichende Zielfärbung bewirkt;
- ein Farbkorrekturmodellmodul zum Festlegen eines Farbkorrekturmodells, welches einen Zusammenhang zwischen einer Abweichung einer Farbpigmentmenge für zumindest ein Farbpigment von der Referenzfarbpigmentmenge des zumindest einen Farbpigments und einer daraus resultierenden Abweichung einer Färbung des Referenzsubstrats von der Zielfärbung beschreibt; und
- ein Zielfarbpigmentmengenmodul zum Bestimmen einer Zielfarbpigmentmenge, welche von der Referenzfarbpigmentmenge um eine Farbpigmentmengenkorrektur abweicht, welche gemäß dem festgelegten Farbkorrekturmodell die ermittelte Eigenfärbung des optischen Glases kompensiert.

**13.** Färbesystem nach Anspruch 12, außerdem umfassend ein Farbpigmentapplikationsmodul zum Aufbringen der Zielfarbpigmentmenge auf zumindest eine Oberfläche des optischen Glases.

**14.** Computerprogrammprodukt, umfassend Programmcode, der geladen und ausgeführt in einem Färbesystem nach Anspruch 12 dieses veranlasst, ein Verfahren gemäß einem der Ansprüche 1 bis 10 auszuführen.

**Claims**

**1.** A method of coloring an optical glass, in particular an ophthalmic glass comprising a predetermined glass material, to achieve a target coloration of the optical glass, the method comprising:

- determining a material-specific inherent coloration of the predetermined glass material;
- determining a glass thickness at a plurality of evaluation locations on the optical glass;
- determining an intrinsic color of the optical glass from the material-specific intrinsic color of the predetermined glass material and the glass thickness at the plurality of evaluation locations on the optical glass;
- determining a reference color pigment amount for at least one color pigment such that the reference color pigment amount applied to a reference substrate provides for the reference substrate the target coloration to be achieved on the optical glass;
- determining a color correction model describing a relationship between a deviation of a color pigment amount for at least one color pigment from the reference color pigment amount of the at least one color pigment and a resulting deviation of a coloration of the reference substrate from the target coloration; and
- determining a target color pigment amount that deviates from the reference color pigment amount by a color pigment amount correction that compensates for the determined intrinsic coloration of the optical glass according to the determined color correction model.

2. The method according to claim 1, wherein the material of the reference substrate corresponds to the predetermined glass material.

3. The method of claim 1 or 2, wherein determining a glass thickness at a plurality of evaluation locations on the optical glass comprises determining a deviation $\Delta d$ of the glass thickness of the optical glass at a plurality of evaluation locations on the optical glass from a thickness of the reference substrate, and wherein determining an intrinsic coloration of the optical glass comprises determining a deviation $\Delta \vec{F}$ of an intrinsic coloration of the optical glass from an intrinsic coloration of the reference substrate based on the determined deviation $\Delta d$ of the thickness of the optical glass from a thickness of the reference substrate according to

$$\Delta \vec{F} = \Delta d \cdot \vec{D}$$

with a volume color vector $\vec{D}$.

4. The method according to any one of the preceding claims, wherein setting a color correction model comprises determining a pigment amount correction matrix $\overleftrightarrow{M}$ such, such that the relationship between a deviation $\Delta \vec{P} = \vec{P} - \vec{P_r}$ of a color pigment amount $\vec{P}$ for at least one color pigment from the reference color pigment amount $\vec{P_r}$ of the at least one color pigment and a resulting deviation $\Delta \vec{Z} = \vec{Z} - \vec{Z_z}$ of a coloring $\vec{Z}$ of the reference substrate from the target coloring $\vec{Z_z}$ is described by

$$\Delta \vec{P} = \overleftrightarrow{M} \cdot \Delta \vec{Z} \ .$$

5. The method according to claim 4, wherein the pigment amount correction matrix $\overleftrightarrow{M}$ is determined experimentally on the reference substrate.

6. The method according to claim 4 or 5 in connection with claim 3, wherein a target color pigment amount $\vec{P_z}$ is determined according to

$$\vec{P_z} = \vec{P_r} - \overleftrightarrow{M} \cdot \Delta \vec{F} \ .$$

7. The method according to any one of the preceding claims, wherein determining a glass thickness at a plurality of evaluation locations on the optical glass is performed using data sets of an optical calculation and optimization method of at least one glass surface of the optical glass.

8. The method according to any one of the preceding claims, wherein the target coloration $\vec{Z_z}$ to be achieved for the optical glass is determined according to

$$\vec{Z_z}(\vec{x}) = I(\vec{x}) \cdot \vec{Z_{0,z}} + (1 - I(\vec{x})) \cdot \vec{Z_{U,z}}$$

with a first target coloration $\overrightarrow{Z_{0,z}}$, to be achieved at a first evaluation point $\overrightarrow{x_0}$; on the optical glass, a second target coloration $\overrightarrow{Z_{U,z}}$, to be achieved at a second evaluation point $\overrightarrow{x_U}$ on the optical glass, and an interpolation function $I(\overrightarrow{x})$, which satisfies $I(\overrightarrow{X_0}) = 1$ and $I(\overrightarrow{X_U}) = 0$, and depends on a position $\overrightarrow{x}$ on the optical glass, and wherein determining a reference color pigment quantity comprises:

- determining a first reference color pigment amount $\overrightarrow{P_{O,r}}$ such that the first reference color pigment amount $\overrightarrow{P_{O,r}}$ applied to the reference substrate causes the first target coloration $\overrightarrow{Z_{O,z}}$ to be achieved on the optical glass; and
- determining a second reference color pigment amount $\overrightarrow{P_{U,r}}$ such that the second reference color pigment amount $\overrightarrow{P_{U,z}}$ applied to the reference substrate effects for the reference substrate the second target coloration $\overrightarrow{Z_{U,z}}$ to be achieved on the optical glass.

9. The method according to claim 8, wherein establishing a color correction model comprises:

- determining a first pigment amount correction matrix $\overleftrightarrow{M_0}$ such that the relationship between a first deviation $\Delta\overrightarrow{P_0} = \overrightarrow{P_0} - \overrightarrow{P_{0,z}}$ of a first color pigment amount $\overrightarrow{P_0}$ for at least one color pigment from the first reference color pigment amount $\overrightarrow{P_{0,r}}$ of the at least one color pigment and a resulting first deviation $\Delta\overrightarrow{Z_0} = \overrightarrow{Z_0} - \overrightarrow{Z_{O,z}}$ of a first coloration $\overrightarrow{Z_0}$ of the reference substrate from the first target coloration $\overrightarrow{Z_{O,z}}$ through and

$$\Delta\overrightarrow{P_0} = \overleftrightarrow{M_0} \cdot \Delta\overrightarrow{Z_0}$$

- determining a second pigment amount correction matrix $\overleftrightarrow{M_U}$ such that the relationship between a deviation $\Delta\overrightarrow{P_U} = \overrightarrow{P_U} - \overrightarrow{P_{U,z}}$ of a second color pigment amount $\overrightarrow{P_U}$ for at least one color pigment from the second reference color pigment amount $\overrightarrow{P_{U,z}}$ of the at least one color pigment and a resulting second deviation $\Delta\overrightarrow{Z_U} = \overrightarrow{Z_U} - \overrightarrow{Z_{U,z}}$ of a second coloration $\overrightarrow{Z_U}$ of the reference substrate from the second target coloration $\overrightarrow{Z_{U,z}}$ through

$$\Delta\overrightarrow{P_U} = \overleftrightarrow{M_U} \cdot \Delta\overrightarrow{Z_U} .$$

10. The method according to claim 9 in conjunction with claim 3, wherein determining a target color pigment amount comprises:

- determining a first target color pigment subset $\overrightarrow{P_{0,k}}$ according to

$$\overrightarrow{P_{0,z}} = \overrightarrow{P_0} - \overleftrightarrow{M_0} \cdot \Delta\overrightarrow{F};$$

- determining a second target color pigment subset $\overrightarrow{P_{U,k}}$ according to

$$\overrightarrow{P_{U,z}} = \overrightarrow{P_U} - \overleftrightarrow{M_U} \cdot \Delta\overrightarrow{F};$$

and
- determining the target color pigment set $\overrightarrow{P_z}$ according to

$$\overrightarrow{P_z} = I(\overrightarrow{x}) \cdot \overrightarrow{P_{0,z}} + (1 - I(\overrightarrow{x})) \cdot \overrightarrow{P_{U,z}}.$$

11. The method according to any one of the preceding claims, further comprising applying the target color pigment amount to at least one surface of the optical glass.

12. A coloring system for coloring an optical glass, in particular an ophthalmic glass comprising a predetermined glass material, to achieve a target coloration of the optical glass, the system comprising:

- a glass material data module for determining a material-specific inherent coloration of the predetermined glass material;

- a glass thickness module for determining a glass thickness at a plurality of evaluation locations on the optical glass;

- an intrinsic coloration determination module for determining an intrinsic coloration of the optical glass from the material-specific intrinsic coloration of the predetermined glass material and the glass thickness at the plurality of evaluation locations on the optical glass;

- a reference module for determining a reference color pigment amount for at least one color pigment such that the reference color pigment amount applied to a reference substrate provides for the reference substrate the target coloration to be achieved on the optical glass;

- a color correction model module for defining a color correction model describing a relationship between a deviation of a color pigment amount for at least one color pigment from the reference color pigment amount of the at least one color pigment and a resulting deviation of a coloration of the reference substrate from the target coloration; and

- a target color pigment amount module for determining a target color pigment amount that deviates from the reference color pigment amount by a color pigment amount correction that compensates for the determined intrinsic coloration of the optical glass according to the determined color correction model.

13. The coloring system according to claim 12, further comprising a color pigment application module for applying the target color pigment amount to at least one surface of the optical glass.

14. A computer program product comprising program code loaded and executed in a coloring system according to claim 12 causing the coloring system to perform a process according to any one of claims 1 to 10.

**Revendications**

1. Procédé de coloration d'un verre optique, en particulier d'un verre ophtalmique comprenant un matériau de verre prédéterminé, pour obtenir une coloration cible du verre optique, le procédé comprenant :

- déterminer une coloration inhérente spécifique au matériau du matériau de verre prédéterminé ;
- déterminer une épaisseur de verre à une pluralité d'emplacements d'évaluation sur le verre optique ;
- déterminer une couleur intrinsèque du verre optique à partir de la couleur intrinsèque spécifique au matériau du matériau de verre prédéterminé et de l'épaisseur du verre au niveau de la pluralité d'emplacements d'évaluation sur le verre optique ;
- déterminer une quantité de pigment de couleur de référence pour au moins un pigment de couleur de sorte que la quantité de pigment de couleur de référence appliquée à un substrat de référence fournisse au substrat de référence la coloration cible à obtenir sur le verre optique ;
- déterminer un modèle de correction de couleur décrivant une relation entre un écart d'une quantité de pigment de couleur pour au moins un pigment de couleur par rapport à la quantité de pigment de couleur de référence du au moins un pigment de couleur et un écart résultant d'une coloration du substrat de référence par rapport à la coloration cible ; et
- déterminer une quantité de pigment de couleur cible qui s'écarte de la quantité de pigment de couleur de référence par une correction de quantité de pigment de couleur qui compense la coloration intrinsèque déterminée du verre optique selon le modèle de correction de couleur déterminé.

2. Procédé selon la revendication 1, dans lequel le matériau du substrat de référence correspond au matériau de verre prédéterminé.

3. Le procédé selon la revendication 1 ou 2, dans lequel la détermination d'une épaisseur de verre à une pluralité d'emplacements d'évaluation sur le verre optique comprend la détermination d'un écart $\Delta d$ de l'épaisseur de verre du verre optique à une pluralité d'emplacements d'évaluation sur le verre optique par rapport à une épaisseur du substrat de référence, et dans lequel la détermination d'une coloration intrinsèque du verre optique comprend la détermination d'un écart $\Delta \vec{F}$ d'une coloration intrinsèque du verre optique par rapport à une coloration intrinsèque du substrat de référence sur la base de l'écart déterminé $\Delta d$ de l'épaisseur du verre optique par rapport à une épaisseur du substrat de référence selon la formule suivante

$$\Delta\vec{F} = \Delta d \cdot \vec{D}$$

avec un vecteur couleur volumique $\vec{D}$.

4. Le procédé selon l'une quelconque des revendications précédentes, dans lequel le réglage d'un modèle de correction de couleur comprend la détermination d'une matrice de correction de quantité de pigments $\overleftrightarrow{M}$ telle, telle que la relation entre un écart $\Delta\vec{P} = \vec{P} - \vec{P_r}$ d'une quantité de pigment de couleur $\vec{P}$ pour au moins un pigment de couleur par rapport à la quantité de pigment de couleur de référence $\vec{P_r}$ du au moins un pigment de couleur et un écart résultant $\Delta\vec{Z} = \vec{Z} - \vec{Z_z}$ d'une coloration $\vec{Z}$ du substrat de référence par rapport à la coloration cible $\vec{Z_z}$ est décrit par

$$\Delta\vec{P} = \overleftrightarrow{M} \cdot \Delta\vec{Z} \ .$$

5. Le procédé selon la revendication 4, dans lequel la matrice de correction de la quantité de pigments $\overleftrightarrow{M}$ est déterminée expérimentalement sur le substrat de référence.

6. Le procédé selon la revendication 4 ou 5 en relation avec la revendication 3, dans lequel une quantité de pigment de couleur cible $\vec{P_z}$ est déterminée selon la formule suivante

$$\vec{P_z} = \vec{P_r} - \overleftrightarrow{M} \cdot \Delta\vec{F} \ .$$

7. Le procédé selon l'une quelconque des revendications précédentes, dans lequel la détermination d'une épaisseur de verre à une pluralité d'emplacements d'évaluation sur le verre optique est effectuée en utilisant des ensembles de données d'un procédé de calcul et d'optimisation optique d'au moins une surface de verre du verre optique.

8. Le procédé selon l'une quelconque des revendications précédentes, dans lequel la coloration cible $\vec{Z_z}$ à atteindre pour le verre optique est déterminée selon

$$\vec{Z_z}(\vec{x}) = I(\vec{x}) \cdot \vec{Z_{0,z}} + (1 - I(\vec{x})) \cdot \vec{Z_{U,z}}$$

avec une première coloration cible $\vec{Z_{O,z}}$, à atteindre en un premier point d'évaluation $\vec{x_0}$ sur le verre optique, une deuxième coloration cible $\vec{Z_{U,z}}$, à atteindre en un deuxième point d'évaluation $\vec{x_U}$ sur le verre optique, et une fonction d'interpolation $I(\vec{x})$, qui satisfait $I(\vec{X_0}) = 1$ et $I(\vec{X_U}) = 0$, et dépend d'une position $\vec{x}$ sur le verre optique, et dans lequel la détermination d'une quantité de pigment de couleur de référence comprend :

- déterminer une première quantité de pigment de couleur de référence $\vec{P_{O,r}}$ telle que la première quantité de pigment de couleur de référence $\vec{P_{O,r}}$ appliquée au substrat de référence provoque la première coloration cible $\vec{Z_{O,z}}$ sur le verre optique ; et
- déterminer une deuxième quantité de pigment de couleur de référence $\vec{P_{U,r}}$ telle que la deuxième quantité de pigment de couleur de référence $\vec{P_{U,r}}$ appliquée au substrat de référence produit pour le substrat de référence la deuxième coloration cible $\vec{Z_{U,z}}$ à obtenir sur le verre optique.

9. Le procédé selon la revendication 8, dans lequel la détermination d'un modèle de correction de couleur comprend :

- déterminer une première matrice de correction de quantité de pigment $\overleftrightarrow{M_0}$ telle que la relation entre un premier écart $\Delta\vec{P_0} = \vec{P_0} - \vec{P_{0,z}}$ d'une première quantité de pigment de couleur $\vec{P_0}$ pour au moins un pigment de couleur par rapport à la première quantité de pigment de couleur de référence $\vec{P_{0,r}}$ du au moins un pigment de couleur et un premier écart qui en résulte $\Delta\vec{Z_0} = \vec{Z_0} - \vec{Z_{0,z}}$ d'une première coloration $\vec{Z_0}$ du substrat de référence par rapport à la première coloration cible $\vec{Z_{0,z}}$ par et

$$\Delta\vec{P_0} = \overleftrightarrow{M_0} \cdot \Delta\vec{Z_0}$$

- déterminer une seconde matrice de correction de quantité de pigment $\overleftrightarrow{M_U}$ de telle sorte que la relation entre un écart $\Delta\overrightarrow{P_U} = \overrightarrow{P_U} - \overrightarrow{P_{U,z}}$ d'une seconde quantité de pigment de couleur $\overrightarrow{P_U}$ pour au moins un pigment de couleur par rapport à la seconde quantité de pigment de couleur de référence $\overrightarrow{P_{U,r}}$ du au moins un pigment de couleur et un deuxième écart qui en résulte $\Delta\overrightarrow{Z_U} = \overrightarrow{Z_U} - \overrightarrow{Z_{U,z}}$ d'une deuxième coloration $\overrightarrow{Z_U}$ du substrat de référence de la deuxième coloration cible $\overrightarrow{Z_{U,z}}$ par

$$\Delta\overrightarrow{P_U} = \overleftrightarrow{M_U} \cdot \Delta\overrightarrow{Z_U}.$$

10. Le procédé selon la revendication 9 en combinaison avec la revendication 3, dans lequel la détermination d'une quantité de pigment de couleur cible comprend:

- déterminer une première quantité partielle de pigment de couleur cible $\overrightarrow{P_{0,k}}$ selon

$$\overrightarrow{P_{0,z}} = \overrightarrow{P_0} - \overleftrightarrow{M_0} \cdot \Delta\vec{F};$$

- déterminer un deuxième sous-ensemble de pigment de couleur cible $\overrightarrow{P_{U,k}}$ selon

$$\overrightarrow{P_{U,z}} = \overrightarrow{P_U} - \overleftrightarrow{M_U} \cdot \Delta\vec{F};$$

et
- déterminer la quantité de pigment de couleur cible $\overrightarrow{P_z}$ selon

$$\overrightarrow{P_z} = I(\vec{x}) \cdot \overrightarrow{P_{0,z}} + (1 - I(\vec{x})) \cdot \overrightarrow{P_{U,z}}.$$

11. Le procédé selon l'une quelconque des revendications précédentes, qui comprend en outre une application de la quantité de pigment de couleur cible sur au moins une surface du verre optique.

12. Système de coloration pour colorer un verre optique, en particulier un verre de lunettes, comprenant un matériau de verre prédéterminé, pour obtenir une coloration cible du verre optique, le système comprenant :

- un module de données de matériau de verre pour déterminer une coloration propre spécifique au matériau du matériau de verre prédéterminé ;
- un module d'épaisseur de verre pour déterminer une épaisseur de verre à une pluralité d'emplacements d'évaluation sur le verre optique ;
- un module de détermination de la coloration propre pour déterminer une coloration propre du verre optique à partir de la coloration propre spécifique au matériau du matériau de verre prédéterminé et de l'épaisseur du verre au niveau de la pluralité d'emplacements d'évaluation sur le verre optique ;
- un module de référence pour déterminer une quantité de pigment de couleur de référence pour au moins un pigment de couleur de telle sorte que la quantité de pigment de couleur de référence appliquée sur un substrat de référence provoque pour le substrat de référence la coloration cible à obtenir sur le verre optique ;
- un module de modèle de correction de couleur pour définir un modèle de correction de couleur qui décrit une relation entre un écart d'une quantité de pigment de couleur pour au moins un pigment de couleur par rapport à la quantité de pigment de couleur de référence dudit au moins un pigment de couleur et un écart résultant d'une coloration du substrat de référence par rapport à la coloration cible ; et
- un module de quantité de pigment de couleur cible pour déterminer une quantité de pigment de couleur cible qui diffère de la quantité de pigment de couleur de référence d'une correction de quantité de pigment de couleur qui, selon le modèle de correction de couleur déterminé, compense la coloration propre déterminée du verre optique.

13. Système de coloration selon la revendication 12, comprenant en outre un module d'application de pigment de couleur pour appliquer la quantité de pigment de couleur cible sur au moins une surface du verre optique.

14. Produit programme d'ordinateur comprenant un code de programme chargé et exécuté dans un système de coloration selon la revendication 12, amenant celui-ci à exécuter un procédé selon l'une quelconque des revendications 1 à 10.

## FIG 1

Interpolationsfunktionen

FIG 2A

4.5

1.6

y

20

0

-20

-20          0          20          x

FIG 2B

FD: 2,0

FIG 2C

FIG 3A

FIG 3B

FIG 3C

29

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0466451 A
- EP 0982432 B1
- EP 1905890 A2
- EP 1992734 B1
- EP 2261419 B1
- EP 2532781 B1
- EP 1683645 B1
- EP 2319981 B1
- EP 2460666 B1